# EUROPEAN PATENT SPECIFICATION

(11) **EP 4 441 188 B1**
(45) Date of publication and mention of the grant of the patent: **22.07.2026**
(21) Application number: 22818704.3
(22) Date of filing: 18.11.2022
(51) Int. Cl.: C11D 3/37, C08G 65/26, C08G 65/334

(54) **AMPHOTERICALLY-MODIFIED TRIALKYLENE TETRAMINE ETHOXYLATES FOR IMPROVED STAIN REMOVAL OF LAUNDRY DETERGENTS**
AMPHOTERISCH MODIFIZIERTE TRIALKYLEN-TETRAMIN-ETHOXYLATE ZUR VERBESSERTEN FLECKENENTFERNUNG VON WASCHMITTELN
ÉTHOXYLATES D'OLIGOPROPYLÈNEIMINE MODIFIÉS DE MANIÈRE AMPHOTÈRE POUR L'ÉLIMINATION AMÉLIORÉE DES TACHES DE DÉTERGENTS DE BLANCHISSERIE

(30) Priority: 29.11.2021 EP 21210972
(43) Date of publication of application: 09.10.2024
(73) Proprietor: BASF SE, 67056 Ludwigshafen am Rhein (DE)
(72) Inventor: TUERK, Holger, 67056 Ludwigshafen (DE); ENGERT, Susanne Carina, 67056 Ludwigshafen (DE); HAYDL, Alexander Michael, 68199 Mannheim (DE)
(74) Representative: BASF IP Association
(86) International application number: PCT/EP2022/082405
(87) International publication number: WO 2023/094275

(56) References cited:
- EP-A1- 1 198 492
- EP-A1- 3 039 109
- MERVYN ISRAEL ET AL: "Analogs of Spermine and Spermidine. I. Synthesis of Polymethylenepolyamines by Reduction of Cyanoethylated α,ι-Alkylenediamines 1,2", JOURNAL OF MEDICINAL CHEMISTRY, vol. 7, no. 6, 1 November 1964 (1964-11-01), US, pages 710 - 716, XP055354696, ISSN: 0022-2623, DOI: 10.1021/jm00336a006

## Description

The present invention relates to certain amphoterically-modified ethoxylated oligoamines, their manufacture and use.

In the following, oligo-/polypropyleneimine is also abbreviated "PPI", oligo-/polyethyleneimine is also abbreviated "PEl".

Furthermore, in the following, ethylene oxide is sometimes referred to as "EO" and propylene oxide is sometimes referred to as "PO".

Alkoxylated oligo- and polyalkyleneimines, especially alkoxylated oligo- and polyethyleneimines, are well known as additives for various applications, such as laundry detergents (e.g., EP3301154, EP3167034 and EP112593), additives for cementitious binder systems (WO2016187085), or hard surface cleaners (EP2961819). In case of utilization within laundry applications, benefits on both primary cleaning and secondary cleaning performance have been mentioned.

In contrast, modified oligo- and polyalkyleneimine alkoxylates are less common.

EP2662436 describes cationic alkoxylated polyethyleneimines in combination with bleach boosters for automatic dish wash applications. Both hydrophobically- and amphoterically-modified polyalkyleneimines for detergent compositions are described in WO2004020563.

Laundry compositions containing alkoxylated and optionally further cationically- or amphoterically-modified polyalkyleneimines bearing at least 6 N-atoms per molecule are described in EP2961821 for example. More specifically oligo- and polypropyleneimines exhibiting at least 6 N-atoms per molecule, modified and unmodified, are disclosed which led to benefits in soil removal and contribute to improved whiteness. Any impact on the rheology of the detergents has not been mentioned.

In addition, EP3039109 and EP3039057 describe predominantly ethoxylated and optionally further amphoterically-modified oligo- and polyalkyleneimines with low melting points. Due to the incorporation of at least one mol of a C3 to C5 alkylene oxide into the polyalkoxylate chains, mainly based on ethylene oxide, polymers with low melting points can be obtained being favorable for their preparation process. Any benefits in terms of application performance in comparison to identical polymers based solely on ethylene oxide and thus higher melting points have not been mentioned.

Furthermore, EP1198492 describes zwitterionic (i.e., amphoterically-modified) alkoxylated polyamines with improved thermal stability, used as additives for laundry detergents. In general, the amphoteric modification of the materials has been obtained by a combination of independent quaternization and sulfation steps, wherein the sulfation has been carried out with a sulfation agent such as chlorosulfonic acid.

The use of chlorosulfonic acid has the disadvantage that salt is obtained which may lead to corrosion; furthermore, methanol is a by-product, which is classified as toxic.

The described zwitterionic polyamines have a net anionic charge, i.e., the number of anionic groups exceeds the number of cationic groups by at least 20%, preferably by at least 50%. As one example, experimental example no. 4 of said document may be cited.

An improved benefit on cleaning performance and a positive impact on the viscosity of the detergents has not been mentioned.

The process of manufacturing alkoxylated and further amphoterically-modified oligo- and polyalkyleneimines is in principle already known in literature.

As mentioned before, the manufacturing process of alkoxylated zwitterionic polyamines, wherein the alkoxylates have been quarternized with a modification agent (1) and sulfatized using a different modification agent (2) (e.g., chlorosulfonic acid), are described in EP1198492. The obtained structures have a net anionic charge.

WO2001029112 describes a process for the sulfation of alkoxylated quarternized polyamines using sulfur trioxide as sulfation agent, allowing high sulfation degrees. The described structures also possess a net anionic charge.

A process based on a combination of alkoxylation, quaternization and transsulfation starting from tertiary aminoalcohols has been described in EP1309546. The process includes the reaction of a tertiary amine with a sulfation precursor (e.g., dialkyl sulfate) forming an admixture comprising a quarternized amine and a sulfating species. The hydroxyl species has then been sulfated under acidic conditions. More specifically, the preparation of alkoxylated, quaternized and fully sulfated oligo- and polyalkyleneimines has been disclosed, by using auxiliary amines. The obtained polymers did not contain any free hydroxyl groups anymore, i.e., all groups have been converted into sulfate groups. Therefore, the net charge of the described polymers has been anionic.

Another process based on a combination of alkoxylation, quaternization and transsulfation without the use of auxiliary amines has been described in WO200424858. The process includes the reaction of a tertiary amine in the backbone of an alkoxylated oligo- or polyamine with a sulfation precursor (e.g., dialkyl sulfate) forming an admixture comprising a quarternized polyamine alkoxylate and a sulfating species. The hydroxyl species has then been sulfated under acidic conditions. Depending on the degree of conversion of the transsulfation process, polymers exhibiting either a neutral or a slightly net cationic charge could have been obtained. In any case, the polyalkylene oxide blocks contain free terminal hydroxyl groups besides anionic sulfate groups. The same process has also been described for specific polyamine backbones and for specific polyalkylene oxide side chains in the above-mentioned patents EP2961821, EP3039109 and EP3039057.

Unpublished PCT application no. PCT/EP2021/063393 describes amphoterically-modified oli-gopropyleneimine ethoxylates for improved stain removal of laundry detergents.

Although several different unmodified and modified oligo- and polyalkyleneimine alkoxylates and their manufacturing process have been already described in the prior art that exhibit good cleaning performance in laundry application and that sometimes also did not lead to a huge negative impact on the rheology of the detergent formulations, there was still a need for better materials, especially in terms of better performance at lower dosage (improved weight-efficiency of the polymers). Furthermore, there was a need for polymers with improved cleaning performance in laundry applications, *and* low or even no (negative) influence on viscosity of laundry formulations. In addition, there was also a need for a simple preparation process, avoiding the usage of more than one modification agent for quaternization and sulfation and/or avoiding the usage of auxiliary materials.

Surprisingly, it has been found in the present invention that specific amphoterically-modified trialkylene tetramine ethoxylates can contribute to significantly improved stain removal of laundry detergents. The improved performance of the inventive materials vs. the prior art polymers is especially visible at very low inclusion levels, which is an important prerequisite for an application in top loader machines. Their higher weight-efficiency favors their usage in highly concentrated product forms, e.g., in single mono doses. Furthermore, the inventive amphoterically-modified trialkylene tetramine ethoxylates lead to minimized negative impact on the viscosity of the formulations. The inventive materials can be easily obtained starting from the respective trialkylene tetramine by a combination of ethoxylation, quaternization and transsulfation, whereas the quaternization and the transsulfation are carried out using dialkyl sulfate as single modification agent, i.e., a usage of more than one modification agent and/or the usage of auxiliary materials are not needed. The inventive amphoterically-modified trialkylene tetramine ethoxylates have a neutral or slightly net cationic charge, depending on the degree of conversion during the transsulfation step.

Thus, one aspect of the present invention are amphoterically-modified trialkylene tetramine ethoxylates (A) of general formula (I) 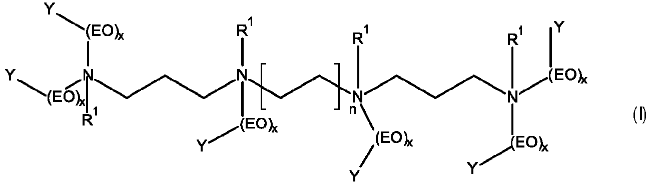 wherein
R¹ are same or different and selected from C₁-C₄-alkyl, H and a free electron pair, wherein at least 50%, preferably at least 80%, more preferably at least 90%, of all R¹ are C₁-C₄-alkyl,
EO means -CH₂-CH₂-O,
Y are same or different and selected from SO₃⁻ and H, wherein at least 30%, preferably
at least 50%, more preferably at least 60% of all Y are SO₃⁻, and wherein at most 66.7 % of Y are SO₃⁻,
x are same or different and selected from 5 to 50, preferably 10 to 40, and
n is selected from 1, 2 and 3, preferably 1, and wherein, preferably, n = 1, 2 or 3, at least 80% of R¹ are C₁-C₄-alkyl and the ratio of R¹ = C₁-C₄-alkyl to Y = SO₃⁻ is on average from 1.0:1.0 to 1.0:0.8.

The amphoterically-modified trialkylene tetramine ethoxylates (A) are internal zwitterions (with a net charge of around zero). The counterions of the quaternized nitrogen atoms are SO₃⁻ ions or alkyl sulfate ions (C₁ to C₄ monoalkyl sulfates).

Since every inventive tetramine exhibits exactly 4 nitrogen atoms, but after alkoxylation exactly 6 hydroxyl groups, and since a dialkyl sulfate is used as single reagent to perform both the quaternization and the sulfation reaction step, the amount of sulfate groups could never exceed a value of 66.6%, i.e., at most 66.7% of all Y are SO₃⁻.

This feature (amongst other) differentiates the inventive amphoterically-modified trialkylene tetramine ethoxylates (A) from the prior art, e. g. EP 1 198 492 mentioned above, which discloses compounds with much higher degree of sulfation (by definition related to all available hydroxyl groups) and thus with a net anionic charge.

After optional neutralisation and optional dilution with water, further anions and cations are present in the mixture, still the polymer itself can be considered as an internal zwitterion.

In a preferred embodiment, from 93% to 97% of all R¹ are C₁-C₄-alkyl.

In a preferred embodiment of the inventive amphoterically-modified trialkylene tetramine ethoxylates (A) of general formula (I), n is 1, and/or at least 90% of all R¹ are methyl.

In a further preferred embodiment of the inventive amphoterically-modified trialkylene tetramine ethoxylates (A) of general formula (I), n is 1, and/or at least 90% of all R¹ are methyl, and/or x is in the range of 15 to 30.

In a further preferred embodiment of the inventive polymers, n = 1, 2 or 3, at least 80% of R¹ are C₁-C₄-alkyl and the ratio of R¹ = C₁-C₄-alkyl to Y = SO₃⁻ is on average from 1.0:1.0 to 1.0:0.8.

Further aspects of the present invention include:

A mixture of compounds comprising at least one inventive amphoterically-modified trialkylene tetramine ethoxylate (A) as described above and at least one isomeric compound according to formula (II) 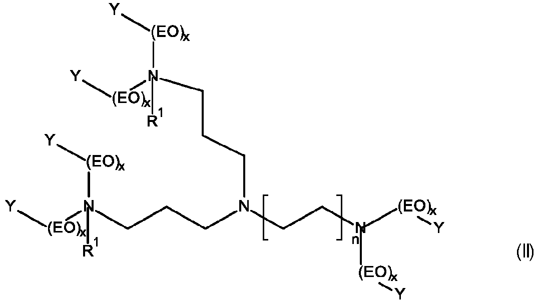 wherein
R¹ are same or different and selected from C₁-C₄-alkyl, H and a free electron pair, wherein at least 50%, preferably at least 80%, more preferably at least 90%, of all R¹ are C₁-C₄-alkyl,
EO means -CH₂-CH₂-O,
Y are same or different and selected from SO₃⁻ and H, wherein at least 30%, preferably at least 50% of all Y are SO₃⁻,
x are same or different and selected from 5 to 50, preferably 10 to 40, and
n is selected from 1, 2 and 3, preferably 1.

A preferred mixture of compounds, as described above, comprises an amphoterically-modified trialkylene tetramine ethoxylate (A) according to formula (I) and compounds according to formula (II) in a total molar ratio in the range of from 10:1 or higher.

In a preferred embodiment of the present invention, the inventive amphoterically-modified trialkylene tetramine ethoxylates (A) are obtained in a mixture additionally comprising the sulfate of an alkali metal and /or an amine.

In a further preferred embodiment of the inventive mixture of compounds, the mixture additionally comprises the sulfate salt of an amine, preferably the sulfate salt of an alkanolamine.

In another preferred embodiment of the present invention, the inventive amphoterically-modified trialkylene tetramine ethoxylates (A) and mixtures containing the same, are mixed with water in any ratio. Preferably, the mixture contains from 1 to 80 wt% water, more preferably 1 to 60 wt% water, even more preferably 5 to 50 wt% water and most preferably 10 to 40 wt% water.

To the aqueous solutions of the inventive amphoterically-modified trialkylene tetramine ethoxylates (A) and mixtures containing the same, may be added also at least one antimicrobial agent. Preferably, 2-phenoxyethanol (CAS-no. 122-99-6, for example Protectol^{®} PE available from BASF) or 4,4'-dichloro-2-hydroxydiphenylether (CAS: 3380-30-1), and combinations thereof, are being used.

The 4,4'-dichloro-2-hydroxydiphenylether may be used as a solution, for example a solution of 30 wt% of 4,4'-dichloro-2-hydroxydiphenylether in 1,2-propyleneglycol, e. g. Tinosan^{®} HP 100 available from BASF.

### Process for manufacturing inventive compounds

A further aspect of the present invention is also a process for making inventive amphoterically-modified trialkylene tetramine ethoxylates (A), said process comprising the steps of
(a) providing an amine selected from 1,2-ethylene diamine, 1,4-butylene diamine, 1,6-hexamethylene diamine and mixtures thereof,
(b) cyanoethylation of said amine with acrylonitrile in a ratio from 1:1 to 1:2.5, followed by hydrogenation, to obtain trialkylene tetramines with 1, 2 and 3 repeating units,
(c) optionally purification of the trialkylene tetramines from step (b)
(d) ethoxylation of said trialkylene tetramines from step b or c, and
(e) at least partial quaternization and transsulfation with a di-C₁-C₄-alkyl sulfate.

In the context of the present invention, the term "trialkylene tetramines with 1,2 or 3 repeating units" means trialkylene tetramines that have a centric alkylene spacer unit with variable chain length, defined by the parameter n (n = 1,2 or 3), according to formula (I). I.e., the term "repeating unit" stands for ethylene units and not for any alkylene imine or more specifically ethylene imine units.

In one embodiment of the inventive process, the purification step (c) is performed to obtain trialkylene tetramines with 1, 2 and 3 repeating units, or mixtures thereof, with a purity of at least 50 wt%, preferably of at least 75 wt%, most preferably of at least 90 wt%.

In a preferred embodiment of the inventive process described above, the quaternization in step (e) is performed with dimethyl sulfate.

In a further preferred embodiment of the inventive process described above, the transsulfation in step (e) is performed with sulfuric acid or methane sulfonic acid (MSA) as a catalyst.

In a further preferred embodiment of the inventive process, the transsulfation in step (e) is performed quantitatively (>=80%) and a slightly cationic or net neutral polymer is obtained.

In a further preferred embodiment of the inventive process described above, the process additionally includes a subsequent step of neutralization of the sulfuric acid with a base selected from alkali metal hydroxides and amines. Preferably, a base selected from amines, more preferably alkanolamines, or aqueous solutions thereof may be used.

The inventive process avoids the use of problematic reagents like chlorosulfonic acid; thus, improvements can be achieved, e. g., less corrosivity and reduced dangers for human health.

In a preferred embodiment of the inventive process, the ethoxylation in step (d) is performed in two sub-steps, viz. (i) conversion with up to one mole of EO per N-H function, followed by (ii) conversion with more ethylene oxide under alkaline catalysis.

A further aspect of the present invention are also amphoterically-modified trialkylene tetramine ethoxylates (A) as defined above, obtainable by the inventive process described above (and described below in more detail).

**Steps (a) to (c)** of the inventive process mentioned above may be performed as follows.

Acrylonitrile (1.0 to 2.5 equivalents) may be added dropwise to one equivalent of either 1,2-ethylene diamine, 1,4-butylene diamine, 1,6-hexamethylene diamine, or mixtures thereof, optionally dissolved in a solvent, in a reaction vessel at a temperature between 5 °C and 80 °C, as previously described in CN102941160 and/or WO9214709. Upon complete addition reaction, the reaction may be stirred at the indicated temperature until the starting materials were fully consumed and then cooled to room temperature. After optional purification (but preferably without purification), the crude mixture may be subjected to a hydrogenation in a pressure reactor catalyzed by a [Cu], [Co], [Ni], [Pd], [Pt] or [Ru] catalyst with or without solvent at elevated hydrogen and optionally ammonia pressures, as described previously in DD238043 and/or JP08333308 and/or WO 2018046393. During the hydrogenation, the temperature may be between 70 °C and 200 °C, preferably between 70 °C and 150 °C, and the hydrogen pressure between 1 and 250 bar, preferably between 50 and 250 bar. The catalyst may be removed, for example by filtration, and volatiles may be removed under reduced pressure. The obtained mixture of the desired oligoamine compounds may be then separated in the next step via distillation under reduced pressure (<1 bar) to yield the purified target trialkylene tetramines with 1, 2 and 3 repeating units, i.e., N1,N1'-(ethane-1,2-diyl)bis(propane-1,3-diamine) (N4-Amine), N1,N1'-(butane-1,4-diyl)bis(propane-1,3-diamine) (Spermine) or N1,N1'-(hexane-1,6-diyl)bis(propane-1,3-diamine), or mixtures thereof.

In one embodiment of the present invention, the crude mixture obtained according to the description above contains predominantly (at least 50 wt%) of the target (linear) tetramines, preferably at least 75 wt% of the target (linear) tetramines, more preferably at least 90 wt% of the target (linear) tetramines.

In another embodiment of the invention, the crude mixture according to the description above is purified by distillation, to remove any impurities, such as monomers, other oligomers or branched structures and branched isomers, respectively, to obtain the linear target compounds, N1,N1'-(ethane-1,2-diyl)bis(propane-1,3-diamine) (N4-Amine), N1,N1'-(butane-1,4-diyl)bis(propane-1,3-diamine) (Spermine) or N1,N1'-(hexane-1,6-diyl)bis(propane-1,3-diamine), or mixtures thereof, with a purity of at least 50 wt%, preferably at least 75 wt%, more preferably at least 90 wt%.

In one embodiment of the invention, the purified N1,N1'-(ethane-1,2-diyl)bis(propane-1,3-diamine) (N4-Amine), N1,N1'-(butane-1,4-diyl)bis(propane-1,3-diamine) (Spermine) or N1,N1'-(hexane-1,6-diyl)bis(propane-1,3-diamine), or mixtures containing the same, may contain isomeric compounds (structure after alkoxylation/modification according to formula (II)) in a ratio of 10:1 mol% or higher. 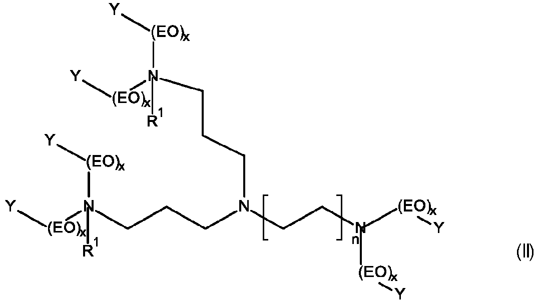 wherein
R¹ are same or different and selected from C₁-C₄-alkyl, H and a free electron pair, wherein at least 50%, preferably at least 80%, more preferably at least 90%, of all R¹ are C₁-C₄-alkyl,
EO means -CH₂-CH₂-O,
Y are same or different and selected from SO₃⁻ and H, wherein at least 30%, preferably at least 50% of all Y are SO₃⁻,
x are same or different and selected from 5 to 50, preferably 10 to 40, and
n is selected from 1, 2 and 3, preferably 1.

**Step (d)** of the above manufacturing process may be performed as follows.

The inventive process step (d) is characterized by using only ethylene oxide as alkoxylation agent. Other alkylene oxides like propylene oxide are not useful for the inventive process and do not lead to the inventive product and its properties in laundry application.

In a preferred embodiment of step (d) of the inventive manufacturing process, ethoxylation is performed in two steps.

According to a preferred embodiment of the invention, the ethylene oxide is added in a first step (i) of process step (d) in an amount of 0.2 to 1.0 ethylene oxide units per NH-group of the trialkylene tetramines with 1, 2 and 3 repeating units, or mixtures thereof, preferably 0.5 to 0.99, more preferably 0.6 to 0.95 ethylene oxide units per NH-group of the trialkylene tetramines, even more preferably 0.70 to 0.95 ethylene oxide units per NH-group of the trialkylene tetramines (under-hydroxyethylation).

In a preferred embodiment of the inventive process, the minimum amount of ethylene oxide units per NH-group added in step (i) is at least identical to the amount of basic catalyst C added later in step (ii), or higher, in order to prevent formation of polyethylene glycol via direct reaction of catalyst C with ethylene oxide during step (ii).

Preferably, the sum of the amounts of ethylene oxide EO added in steps (i) and (ii) lies in the range of 5 to 50 ethylene oxide units per NH-group of the trialkylene tetramines with 1, 2 and 3 repeating units, or mixtures thereof, more preferably 10 to 40 ethylene oxide units per NH-group of the trialkylene tetramines, further preferably 15 to 30 ethylene oxide units per NH-group of the trialkylene tetramines.

Preferably, the first step (i) of process step (d) is carried out in the absence of a basic catalyst. Water may be added in the first step (i) of process step (d).

In one embodiment of the present invention, the second step (ii) of step (d) of the inventive process is carried out in the presence of a basic catalyst. Suitable bases are such as LiOH, NaOH, KOH, CsOH and mixtures thereof, sodium or potassium alkoxides such as potassium methylate (KOCH₃), potassium tert-butoxide, sodium methylate (NaOCH₃), sodium n-hexanolate and sodium ethoxide. Further examples of catalysts are alkali metal hydrides and alkaline earth metal hydrides such as sodium hydride and calcium hydride, and alkali metal carbonates such as sodium carbonate and potassium carbonate. Preference is given to the alkali metal hydroxides, preference being given to potassium hydroxide and sodium hydroxide, and to alkali metal alkoxides, preference being given to potassium methylate (KOCH₃) and sodium methylate (NaOCH₃). Particular preference is given to potassium hydroxide and to potassium methylate (KOCH₃). Typical use amounts for the base, for example KOH, are from 0.02 to 10% by weight, in particular from 0.05 to 1% by weight, relative to the trialkylene tetramine ethoxylates.

In a preferred embodiment of the inventive process, the basic catalyst C is only used in the second step (ii) and is selected from the group consisting of alkaline earth metal containing basic catalysts.

A specifically preferred embodiment of a basic catalyst in the inventive process is KOH; KOH may be used in the inventive process as a solution in water.

In an embodiment of the inventive process, the basic catalyst C is added in an amount of 0.05 to 0.3 % by weight, preferably 0.15 to 0.25 % by weight, relative to the trialkylene tetramine ethoxylates.

In an embodiment, the temperature during the first step (i) of step (d) of the inventive process is in the range of 90 °C to 160 °C, preferably 100 °C to 150 °C, more preferably 110 °C to 140 °C.

In an embodiment, the temperature during the second step (ii) of step (d) of the inventive process is in the range of 100 °C to 180 °C, preferably 120 °C to 160 °C, more preferably 120 °C to 145 °C.

Higher temperatures than specified above during the alkoxylation steps are also possible, but are not preferred, since they usually lead to (more) colored products.

In one embodiment of the present invention, the reaction during the first step (i) of step (d) of the inventive process may be carried out at a total pressure of up to 15 bar, preferably up to 10 bar, for example 1 to 6 bar. Preferred vessels for carrying out the reaction are autoclaves and tubular reactors.

In one embodiment of the present invention, the reaction during the second step (ii) of step (d) of the inventive process may be carried out at a total pressure of up to 15 bar, preferably up to 10 bar, for example 2 to 10 bar. Preferred vessels for carrying out the reaction are autoclaves and tubular reactors. The reaction during the second step (ii) of step (d) of the inventive process can be interrupted at different intermediates (i.e., alkoxylation degrees) and can be continued with or without additional catalyst addition.

The product obtained after step (ii) of step (d) of the inventive process, i.e., trialkylene tetramine ethoxylates, may be treated with a bleaching agent. The bleaching agent is preferably selected from the group consisting of borates, hypochlorites, borohydrates and hydrogen peroxide.

**Step** (e) of the inventive process mentioned above: (At least partial) Quaternization and transsulfation with a di-C₁-C₄-alkyl sulfate.

The quaternization and transsulfation step (e) is a process based on a combination of quaternization of the amino groups in the backbone of the trialkylene tetramine ethoxylates and sulfation of the terminal hydroxyl moieties of the polyethylene oxide side chains. In a more general view, the quaternization and transsulfation step (e) is comprising a sub-step (e1) which forms a sulfating species (= quaternization) and a sub-step (e2) which provides controllable sulfation of one or more hydroxyl moieties (= transsulfation).

The first required sub-step (e1) of the process is conducted under basic or close to pH-neutral conditions. The second sub-step (e2) of the process is conducted under acidic conditions.

The process is described in detail in the following:
Sub-step (e1) (quaternization): In a preferred embodiment of the present invention, from 0.5 to 1.0 equivalents of a sulfating agent, preferably from 0.8 to 0.99 equivalents and most preferably from 0.9 to 0.99 equivalents are reacted with one tertiary amino group of the trialkylene tetramine ethoxylates, to form quaternary ammonium ions in the tetramine backbone and an equal number of sulfating species. If desired the process may be conducted in the presence of a solvent, preferably non-reactive solvents like toluene, glyme or diglyme may be used. The preferred sulfating agent according to the present invention are dialkyl sulfates, preferably di-C₁-C₄-alkyl sulfate, more preferably di-C₁-C₂-alkyl sulfate and most preferably dimethyl sulfate. Sub-step (e1) of the process of the present invention is conducted under basic or close to pH-neutral conditions, at a temperature of 0 °C to 180 °C, preferably 40 °C to 100 °C and even more preferably 50 °C to 90 °C. The reaction when exothermic can be controlled by any suitable means, e.g., by cooling of the reaction vessel or by providing a reflux condenser.

It is known to the person skilled in the art that a typical side reaction which can occur under these conditions is the alkylation of the terminal hydroxyl groups of the polyethylene oxide side chains. In the embodiment of the present invention, at least 90%, preferably at least 95% of the employed di-C₁-C₄-alkyl sulfate react with the tertiary amino groups of the trialkylene tetramine ethoxylates and not with the terminal hydroxyl groups of the polyethylene oxide side chains. To avoid any further alkylation of the terminal hydroxyl groups of the polyethylene oxide side chains, not more than 1.0 equivalents of a sulfating agent per tertiary amino group of the trialkylene tetramine ethoxylates are being used within step (e) of the inventive process.

Sub-step (e2) (transsulfation): The formation of a sulfated hydroxyl species is the second required step of the process of the present invention. One equivalent of a sulfating species is required per hydroxyl moiety which is to be sulfated. The number of sulfating species in the inventive process is identical to the number of quaternary ammonium ions in the oligoamine backbone. Depending on the degree of conversion during the transsulfation step, the obtained product after sub-step (e2) will be an amphoterically-modified polymer with either (i) a net charge of zero (= neutral polymer), i.e. identical number of quaternary ammonium ions in the oligoamine backbone and sulfated hydroxyl groups, in case of a full (100%) conversion of the sulfating species during the transsulfation step; Or (ii) a positive net charge (= slightly cationic polymer), i.e. slightly higher number of quaternary ammonium ions in the oligoamine backbone in comparison to sulfated hydroxyl groups, in case of an only partial (<100%) conversion during the transsulfation step. In order to control the degree of conversion during the transsulfation step, the formulator can remove the alcohol, preferably the C₁-C₄-alcohol, most preferably methanol (depending on the type of di-C₁-C₄-alkyl sulfate employed in step (e1)), which is formed as by-product. In fact, the relative amount of alcohol by-product which is removed can be used as a tool to control the degree of conversion of the transsulfation step. Any process which is convenient to the formulator, e.g., distillation, absorption into a molecular sieve, crystallization or precipitation, may be used, preferably distillation. In many instances, removal of the by-product alcohol already during the reaction will be preferred, preferably by distillation.

The degree of conversion during the transsulfation step according to the present invention is at least 50%, preferably at least 80%. Thus, the preferred ratio of R¹ = C₁-C₄-alkyl to Y = SO₃⁻ in formula (I) is on average from 1.0:1.0 to 1.0:0.8.

The degree of sulfation of the inventive polymers (by definition related to all available hydroxyl groups of the precursor, i.e., the amount of Y = SO₃⁻) is therefore preferably at least 50%, but at most 66.7%.

The final product after sub-step (e2) is obtained as an internal zwitterion with potentially additional cationic charge in case of incomplete conversion (<100%) of the sulfating species during the transsulfation step. The counterions of the quaternized nitrogen atoms are SO₃⁻ ions leading to the formation of the internal zwitterions, and potentially additional alkyl sulfate ions (C₁ to C₄ monoalkyl sulfates), preferably methyl sulfate ions, in case of incomplete conversion during the transsulfation step.

Sub-step (e2) must be conducted under acidic conditions. Suitable acids are, inter alia, sulfuric acid, hydrochloric acid, methane sulfonic acid or Lewis acids (e.g. boron trifluoride). In the process according to the present invention, preferably sulfuric acid is employed. The acid may be added in any amount sufficient to form the desired product, however, the process of the present invention is conducted at a pH less than about 6, preferably less than about 4, more preferably less than about 3 and most preferably at a pH around 2. In fact, acid levels from about 0.01 to 1 molar ratio relative to the trialkylene tetramine ethoxylates are preferred. The catalyst can be introduced by any manner which is convenient to the formulator, however, good mixing should be utilized. Alternatively, the acid may be generated in situ by adding excess sulfating agent and allowing this excess agent to react with a limited source of proton, inter alia, water. Sub-step (e2) of the process of the present invention is conducted at a temperature of 0 °C to 200 °C, preferably 40 °C to 150 °C and even more preferably 70 °C to 120 °C. The reaction when exothermic can be controlled by any suitable means, e.g., by cooling the reaction vessel or by providing a reflux condenser.

The use of sulfuric acid in the preferred embodiment of the present invention may lead to additional sulfation of hydroxyl groups of the trialkylene tetramine ethoxylates as a side-reaction to a minor extent, besides the conversion of hydroxyl groups to sulfate groups from the transsulfation process (i.e., via the employed di-C₁-C₄-alkyl sulfate).

The final product after sub-step (e2) may be further purified to remove volatile by-products and/or the acidic catalyst, preferably the sulfuric acid, or may be isolated as mixture. Volatile by-products, e.g., 1,4-dioxane, may be removed, e.g., via distillation or stripping under vacuum. In case that the acidic catalyst is not removed from the final product after sub-step (e2), the mixture may be isolated as such or the acidic catalyst may be neutralized. In a preferred embodiment of the present invention, the acidic catalyst is not removed, but neutralized. Any suitable base may be used to neutralize the acidic, inter alia, ammonium hydroxide, lithium hydroxide, sodium hydroxide, potassium hydroxide, magnesium hydroxide, calcium hydroxide, barium hydroxide or amines. Preferably, lithium hydroxide, sodium hydroxide, potassium hydroxide or amines are being used, even more preferably sodium hydroxide, alkanolamines, or aqueous solutions thereof.

In one embodiment of the present invention, alkanolamines are being used for the neutralization of the acidic catalyst. In case the employed acid is sulfuric acid, the sulfate salt of an alkanolamine is being formed and the inventive amphoterically-modified trialkylene tetramine ethoxylates (A) are finally obtained in a mixture additionally comprising the sulfate salt of an alkanolamine and water, if aqueous solutions of the bases are being used.

The final product after sub-step (e2), if applicable after removal or neutralization of the acidic catalyst, may be mixed with water in any ratio. Preferably, the final product after sub-step (e2) is mixed with 1 to 80 wt% water, more preferably 1 to 60 wt% water, even more preferably 5 to 50 wt% water and most preferably 10 to 40 wt% water, in order to lower the viscosity and to improve the handling.

An optional step of work-up may also include the adjustment of the pH of the final product, especially if the product is obtained as aqueous solution. Any suitable base or acid may be used to adjust the pH. Preferably, sodium hydroxide, potassium hydroxide or amines are being used as base; Sulfuric acid, hydrochloric acid or methane sulfonic acid as acid. In one embodiment of the present invention, alkanolamines are being used to adjust the pH. A neutral to slightly alkaline pH of the aqueous solution of the inventive polymer is preferred to protect the sulfate groups from being hydrolyzed and cleaved to free hydroxyl groups. Therefore, the pH of the final product in water is preferably adjusted to pH 6 to 14, more preferably to pH 6 to 11 and even more preferably to pH 7 to 10.

Furthermore, antimicrobial agents may be added to improve the preservation of the aqueous solution of the final product.

The following is a non-limiting example of the process according to the present invention:
The alkoxylate product obtained from step (d) of the inventive process described above may be heated to an elevated temperature, usually between 50° and 90° C, and filled into the reactor under protective atmosphere (e. g. nitrogen atmosphere). An equimolar or understoichiometric molar amount of a di-C₁-C₄-alkyl sulfate, for example dimethyl sulfate (DMS), relative to the tertiary amino groups of the trialkylene tetramine ethoxylates, may be dosed into the reactor, preferably within a time span between 1 hour and 5 hours, in a way that the temperature in the reactor does not exceed 90 °C. The reaction may then be stirred for a while to complete the reaction, for example between one hour and five hours, at a temperature not exceeding 90 °C.

Less than one equivalent sulfuric acid relative to the tertiary amino groups of trialkylene tetramine ethoxylates may then be added, and the temperature may be set to a value between 70° and 120° C. The reactor may be set under vacuum (for example 5 to 30 mbar) for one to six hours, optionally under inert gas stripping. After completion of the reaction, sodium hydroxide or triethanolamine (preferably in aqueous solution) and demineralized water may be added, and the pH may be adjusted to pH 7 to 10. Then the liquid product may be removed from the reactor.

The step of transsulfation (second part of step (e) of inventive process) may also be performed in analogy to the process described in WO200424858A1 (Example 4).

The finally obtained polymers according to this invention have a weight-average molecular weight (determined by GPC) of 1000 to 20000 g/mol, preferably 1500 to 15000 g/mol and even more preferably 2000 to 10000 g/mol. In a preferred embodiment of the invention, the amphoterically-modified trialkylene tetramine ethoxylates(A) have a weight-average molecular weight of 2500 to 8000 g/mol.

### Laundry formulations comprising inventive compounds

Another aspect of the present invention is also a laundry formulation, comprising at least one of the inventive amphoterically-modified trialkylene tetramine ethoxylates (A) and/or an inventive mixture of compounds as described above.

Thus, an aspect of the present invention is also the use of the inventive amphoterically-modified trialkylene tetramine ethoxylates (A) and/or an inventive mixture of compounds, as described above, in laundry applications.

The laundry formulations according to the invention can be liquid, gels, or solid compositions, solid embodiments encompassing, for example, powders and tablets. Liquid compositions may be packaged as unit doses.

In one embodiment of the present invention, the **amphoterically-modified trialkylene tetramine ethoxylate (A)** is a component of a laundry formulation (also called laundry care composition in this specification) that additionally comprises at least one anionic surfactant (B).

Examples of suitable **anionic surfactants (B)** are alkali metal and ammonium salts of C₈-C₁₂-alkyl sulfates, of C₁₂-C₁₈-fatty alcohol ether sulfates, of C₁₂-C₁₈-fatty alcohol polyether sulfates, of sulfuric acid half-esters of ethoxylated C₄-C₁₂-alkylphenols (ethoxylation: 3 to 50 mol of ethylene oxide/mol), of C₁₂-C₁₈-alkylsulfonic acids, of C₁₂-C₁₈ sulfo fatty acid alkyl esters, for example of C₁₂-C₁₈ sulfo fatty acid methyl esters, of C₁₀-C₁₈-alkylarylsulfonic acids, preferably of n-C₁₀-C₁₈-alkylbenzene sulfonic acids, of C₁₀-C₁₈ alkyl alkoxy carboxylates and of soaps such as for example C₈-C₂₄-carboxylic acids. Preference is given to the alkali metal salts of the aforementioned compounds, particularly preferably the sodium salts.

In one embodiment of the present invention, anionic surfactants (B) are selected from n-C₁₀-C₁₈-alkylbenzene sulfonic acids and from fatty alcohol polyether sulfates, which, within the context of the present invention, are in particular sulfuric acid half-esters of ethoxylated C₁₂-C₁₈-alkanols (ethoxylation: 1 to 50 mol of ethylene oxide/mol), preferably of n-C₁₂-C₁₈-alkanols.

Compositions according to the invention may comprise at least one **builder** (C). In the context of the present invention, no distinction will be made between builders and such components elsewhere called "co-builders". Examples of builders (C) are complexing agents, hereinafter also referred to as complexing agents (C), ion exchange compounds, and precipitating agents (C). Builders are selected from citrate, phosphates, silicates, carbonates, phosphonates, amino carboxylates and polycarboxylates.

In the context of the present invention, the term citrate includes the mono- and the dialkali metal salts and in particular the mono- and preferably the trisodium salt of citric acid, ammonium or substituted ammonium salts of citric acid as well as citric acid. Citrate can be used as the anhydrous compound or as the hydrate, for example as sodium citrate dihydrate. Quantities of citrate are calculated referring to anhydrous trisodium citrate.

The term phosphate includes sodium metaphosphate, sodium orthophosphate, sodium hydrogenphosphate, sodium pyrophosphate and polyphosphates such as sodium tripolyphosphate. Preferably, however, the composition according to the invention is free from phosphates and polyphosphates, with hydrogenphosphates being subsumed, for example free from trisodium phosphate, pentasodium tripolyphosphate and hexasodium metaphosphate ("phosphate-free"). In connection with phosphates and polyphosphates, "free from" should be understood within the context of the present invention as meaning that the content of phosphate and polyphosphate is in total in the range from 10 ppm to 0.2% by weight of the respective composition, determined by gravimetry.

The term carbonates includes alkali metal carbonates and alkali metal hydrogen carbonates, preferred are the sodium salts. Particularly preferred is Na₂CO₃.

Examples of phosphonates are hydroxyalkanephosphonates and aminoalkanephosphonates. Among the hydroxyalkanephosphonates, the 1-hydroxyethane-1,1-diphosphonate (HEDP) is of particular importance as builder. It is preferably used as sodium salt, the disodium salt being neutral and the tetrasodium salt being alkaline (pH 9). Suitable aminoalkanephosphonates are preferably ethylenediaminetetramethylenephosphonate (EDTMP), diethylenetriamine-pentamethylenphosphonate (DTPMP), and also their higher homologues. They are preferably used in the form of the neutrally reacting sodium salts, e.g., as hexasodium salt of EDTMP or as hepta- and octa-sodium salts of DTPMP.

Examples of amino carboxylates and polycarboxylates are nitrilotriacetates, ethylene diamine tetraacetate, diethylene triamine pentaacetate, triethylene tetramine hexaacetate, propylene diamines tetraacetic acid, ethanol-diglycines, methylglycine diacetate, and glutamine diacetate. The term amino carboxylates and polycarboxylates also include their respective non-substituted or substituted ammonium salts and the alkali metal salts such as the sodium salts, in particular of the respective fully neutralized compound.

Silicates in the context of the present invention include in particular sodium disilicate and sodium metasilicate, alumosilicates such as for example zeolites and sheet silicates, in particular those of the formula α-Na₂Si₂O₅, β-Na₂Si₂O₅, and δ-Na₂Si₂O₅.

Compositions according to the invention may contain one or more builder selected from materials not being mentioned above. Examples of builders are α-hydroxypropionic acid and oxidized starch.

In one embodiment of the present invention, builder (C) is selected from polycarboxylates. The term "polycarboxylates" includes non-polymeric polycarboxylates such as succinic acid, C₂-C₁₆-alkyl disuccinates, C₂-C₁₆-alkenyl disuccinates, ethylene diamine N,N'-disuccinic acid, tartaric acid diacetate, alkali metal malonates, tartaric acid monoacetate, propanetricarboxylic acid, butanetetracarboxylic acid and cyclopentanetetracarboxylic acid.

Oligomeric or polymeric polycarboxylates are for example polyaspartic acid or in particular alkali metal salts of (meth)acrylic acid homopolymers or (meth)acrylic acid copolymers.

Suitable comonomers are monoethylenically unsaturated dicarboxylic acids such as maleic acid, fumaric acid, maleic anhydride, itaconic acid and citraconic acid. A suitable polymer is in particular polyacrylic acid, which preferably has an average molecular weight M_{w} in the range from 2000 to 40 000 g/mol, preferably 2000 to 10 000 g/mol, in particular 3000 to 8000 g/mol.

Further suitable copolymeric polycarboxylates are in particular those of acrylic acid with methacrylic acid and of acrylic acid or methacrylic acid with maleic acid and/or fumaric acid.

It is also possible to use copolymers of at least one monomer from the group consisting of monoethylenically unsaturated C₃-C₁₀-mono- or C₄-C₁₀-dicarboxylic acids or anhydrides thereof, such as maleic acid, maleic anhydride, acrylic acid, methacrylic acid, fumaric acid, itaconic acid and citraconic acid, with at least one hydrophilically or hydrophobically modified comonomer as listed below.

Suitable hydrophobic comonomers are, for example, isobutene, diisobutene, butene, pentene, hexene and styrene, olefins with ten or more carbon atoms or mixtures thereof, such as, for example, 1-decene, 1-dodecene, 1-tetradecene, 1-hexadecene, 1-octadecene, 1-eicosene, 1-docosene, 1-tetracosene and 1-hexacosene, C₂₂-α-olefin, a mixture of C₂₀-C₂₄-α-olefins and polyisobutene having on average 12 to 100 carbon atoms per molecule.

Suitable hydrophilic comonomers are monomers with sulfonate or phosphonate groups, and also nonionic monomers with hydroxyl function or alkylene oxide groups. By way of example, mention may be made of: allyl alcohol, isoprenol, methoxypolyethylene glycol (meth)acrylate, methoxypolypropylene glycol (meth)acrylate, methoxypolybutylene glycol (meth)acrylate, meth-oxypoly(propylene oxide-co-ethylene oxide) (meth)acrylate, ethoxypolyethylene glycol (meth)acrylate, ethoxypolypropylene glycol (meth)acrylate, ethoxypolybutylene glycol (meth)acrylate and ethoxypoly(propylene oxide-co-ethylene oxide) (meth)acrylate. Polyalkylene glycols here can comprise 3 to 50, in particular 5 to 40 and especially 10 to 30 alkylene oxide units per molecule.

Particularly preferred sulfonic-acid-group-containing monomers here are 1-acrylamido-1-propanesulfonic acid, 2-acrylamido-2-propanesulfonic acid, 2-acrylamido-2-methylpropanesulfonic acid, 2-methacrylamido-2-methylpropanesulfonic acid, 3-methacrylamido-2-hydroxypropanesulfonic acid, allylsulfonic acid, methallylsulfonic acid, allyloxybenzenesulfonic acid, methal-lyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 3-sulfopropyl acrylate, 2-sulfoethyl methacrylate, 3-sulfopropyl methacrylate, sulfomethacrylamide, sulfomethylmethacrylamide, and salts of said acids, such as sodium, potassium or ammonium salts thereof.

Particularly preferred phosphonate-group-containing monomers are vinylphosphonic acid and its salts.

Moreover, amphoteric polymers can also be used as builders.

Compositions according to the invention can comprise, for example, in the range from in total 0.1 to 70 % by weight, preferably 10 to 50% by weight, preferably up to 20% by weight, of builder(s) (C), especially in the case of solid formulations. Liquid formulations according to the invention preferably comprise in the range of from 0.1 to 8 % by weight of builder (C).

Formulations according to the invention can comprise one or more alkali carriers. Alkali carriers ensure, for example, a pH of at least 9 if an alkaline pH is desired. Of suitability are, for example, the alkali metal carbonates, the alkali metal hydrogen carbonates, and alkali metal metasilicates mentioned above, and, additionally, alkali metal hydroxides. A preferred alkali metal is in each case potassium, particular preference being given to sodium.

In one embodiment of the present invention, the laundry formulation according to the invention comprises additionally at least one **enzyme (D).**

Useful enzymes are, for example, one or more lipases, hydrolases, amylases, mannanases, proteases, cellulases, hemicellulases, phospholipases, esterases, pectinases, lactases and peroxidases, and combinations of at least two of the foregoing types.

Enzyme (D) can be incorporated at levels sufficient to provide an effective amount for cleaning. The preferred amount is in the range from 0.001% to 5 % of active enzyme by weight in the detergent composition according to the invention. Together with enzymes also enzyme stabilizing systems may be used such as for example calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, HOOC(CH₂)₃COOH, adipic acid and mixtures from at least two of the foregoing, as well as the respective sodium and potassium salts.

Compositions according to the invention may comprise one or more **bleaching agent (E)** (bleaches).

Preferred bleaches (E) are selected from sodium perborate, anhydrous or, for example, as the monohydrate or as the tetrahydrate or so-called dihydrate, sodium percarbonate, anhydrous or, for example, as the monohydrate, and sodium persulfate, where the term "persulfate" in each case includes the salt of the peracid H₂SO₅ and also the peroxodisulfate.

In this connection, the alkali metal salts can in each case also be alkali metal hydrogen carbonate, alkali metal hydrogen perborate and alkali metal hydrogen persulfate. However, the dialkali metal salts are preferred in each case.

Formulations according to the invention can comprise one or more bleach catalysts. Bleach catalysts can be selected from oxaziridinium-based bleach catalysts, bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Formulations according to the invention can comprise one or more bleach activators, for example tetraacetyl ethylene diamine, tetraacetylmethylenediamine, tetraacetylglycoluril, tetraacetylhexylenediamine, acylated phenolsulfonates such as for example n-nonanoyl- or isononanoyloxybenzene sulfonates, N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Formulations according to the invention can comprise one or more **corrosion inhibitors (F).** In the present case, this is to be understood as including those compounds which inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol.

In one embodiment of the present invention, formulations according to the invention comprise in total in the range from 0.1 to 1.5% by weight of corrosion inhibitor.

Formulations according to the invention may also comprise further **cleaning polymers (G)** or **soil release polymers (H).** The additional cleaning polymers (G) may include, without limitation, multifunctional polyethyleneimines (for example BASF's Sokalan^{®} HP20) and/or multifunctional diamines (for example BASF's Sokalan^{®} HP96).

Laundry formulations comprising the inventive amphoterically-modified trialkylene tetramine ethoxylates (A) may also comprise at least one **antimicrobial agent (I).**

The antimicrobial agent may be selected from the list consisting of 2-phenoxyethanol (CAS-no. 122-99-6, for example Protectol^{®} PE available from BASF) and 4,4'-dichloro-2-hydroxydiphenylether (CAS: 3380-30-1), and combinations thereof.

The 4,4'-dichloro-2-hydroxydiphenylether may be used as a solution, for example a solution of 30 wt% of 4,4'-dichloro-2-hydroxydiphenylether in 1,2-propyleneglycol, e. g. Tinosan^{®} HP 100 available from BASF.

The inventive laundry formulation may comprise at least one antimicrobial agent from the above list and/or a combination thereof, and/or a combination with at least one further antimicrobial agent not listed here.

The antimicrobial agent may be added to the inventive laundry formulation in a concentration of 0.0001 to 10% relative to the total weight of the polymer.

Preferably, the formulation contains 2-Phenoxyethanol in a concentration of 0.01% to 5%, more preferably 0.1% to 2% and/or 4,4'-dichloro 2-hydroxydiphenyl ether in a concentration of 0.001% to 1%, more preferably 0.002% to 0.6% (in all cases relative to the total weight of the polymer).

Formulations according to the invention may comprise at least one additional surfactant, selected from non-ionic surfactants and amphoteric surfactants.

### Non-ionic surfactants

Examples of (additional) surfactants are in particular nonionic surfactants. Preferred nonionic surfactants are alkoxylated alcohols and alkoxylated fatty alcohols, di- and multiblock copolymers of ethylene oxide and propylene oxide and reaction products of sorbitan with ethylene oxide or propylene oxide, furthermore alkylphenol ethoxylates, alkyl glycosides, polyhydroxy fatty acid amides (glucamides) and so-called amine oxides.

Preferred examples of alkoxylated alcohols and alkoxylated fatty alcohols are, for example, compounds of the general formula (III) 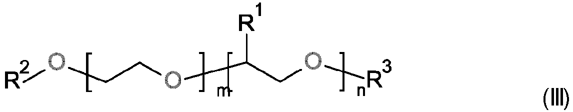 in which the variables are defined as follows:
- R¹: is selected from linear C₁-C₁₀-alkyl, preferably ethyl and particularly preferably methyl,
- R²: is selected from C₈-C₂₂-alkyl, for example n-C₈H₁₇, n-C₁₀H₂₁, n-C₁₂H₂₅, n-C₁₄H₂₉, n-C₁₆H₃₃ or n-C₁₈H₃₇,
- R³: is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,
m and n are in the range from zero to 300, where the sum of n and m is at least one. Preferably, m is in the range from 1 to 100 and n is in the range from 0 to 30.

Here, compounds of the general formula (III) may be block copolymers or random copolymers, preference being given to block copolymers.

Other preferred examples of alkoxylated alcohols and alkoxylated fatty alcohols are, for example, compounds of the general formula (IV) 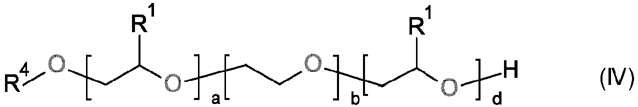 in which the variables are defined as follows:
- R¹: is identical or different and selected from linear C₁-C₄-alkyl, preferably identical in each case and ethyl and particularly preferably methyl,
- R⁴: is selected from C₆-C₂₀-alkyl, in particular n-C₈H₁₇, n-C₁₀H₂₁, n-C₁₂H₂₅, n-C₁₄H₂₉, n-C₁₆H₃₃, n-C₁₈H₃₇,
- a: is a number in the range from zero to 6, preferably 1 to 6,
- b: is a number in the range from zero to 20, preferably 4 to 20,
- d: is a number in the range from 4 to 25.

Preferably, at least one of a and b is greater than zero.

Here, compounds of the general formula (IV) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides such as lauryl dimethyl amine oxide ("lauramine oxide") or alkylphenol ethoxylates or alkyl polyglycosides or polyhydroxy fatty acid amides (glucamides) are likewise suitable. An overview of suitable further nonionic surfactants can be found in EP-A 0 851 023 and in DE-A 198 19 187.

Mixtures of two or more different nonionic surfactants may also be present.

Examples of amphoteric surfactants are C₁₂-C₁₈-alkylbetaines and sulfobetaines.

Formulations according to the invention may also comprise water and additional organic solvents, e.g., ethanol or propylene glycol.

Further optional ingredients may be but are not limited to viscosity modifiers, cationic surfactants, foam boosting or foam reducing agents, perfumes, dyes, optical brighteners, and dye transfer inhibiting agents.

### Examples

In the following paragraphs, several experimental examples are given in order to illustrate some aspects of the present invention.

### Synthesis of inventive and comparative examples:

### Synthesis of oligoamines

N1,N1'-(ethane-1,2-diyl)bis(propane-1,3-diamine) (N4-Amine):
N4-Amine was purchased with a purity of ca. 97% from BASF SE, Ludwigshafen, Germany, and directly used without further purification.

N1,N1'-(butane-1,4-diyl)bis(propane-1,3-diamine) (Spermine):
Spermine was purchased with a purity of ca. 98% from Apollo Scientific Ltd, Stockport, UK, and
directly used without further purification.

N1,N1'-(hexane-1,6-diyl)bis(propane-1,3-diamine):
1.0 equivalent of 1,6-hexamethylene diamine (150 g, 1.29 mol) were reacted with 2.05 equivalents of acrylonitrile (140 g, 2.65 mol) at 50 °C for 6 hours under a nitrogen atmosphere, until complete conversion. Then, 90 g of the crude reaction mixture were transferred into an autoclave and 4.5 g Raney-Co (5 wt% related to the crude reaction mixture) were added. After dosage of 51.8 g (3.05 mol) ammonia, the autoclave was pressurized with hydrogen to 20 bar, heated to 100°C, and pressurized with hydrogen to a final total pressure of 170 bar. The reaction mixture was stirred under these conditions for 17h. Subsequently, the autoclave was cooled down to 40°C and decompressed to atmospheric pressure. After removal of excess ammonia, the reaction mixture was filtered, and all remaining volatiles were removed in vacuo. The final product was obtained with a purity of ca. 94% (GC; RTX-5 Amine (30 m x 0,32 mm x 1,5 µm)) and directly used for the alkoxylation/modification (steps (d) and (e) according to the inventive process) without any further purification.

1,2-ethylene diamine, 1,4-butylene diamine, 1,6-hexamethylene diamine and PEI (Polyethyleneimine, based on Aziridine; Mw 600 g/mol) (Lupasol^{®} FG) were purchased from BASF SE, Ludwigshafen, Germany.

### Inventive examples:

### Polymer P1 (inventive)

453.9 g N4-Amine (2.5 mol, 1 eq.) and 43.7 g water are charged to a steel pressure reactor. The reactor is purged with nitrogen to remove air and a nitrogen pressure of 2.0 bar is set. The reactor is heated to 100 °C and 528.6 g of ethylene oxide (12.0 mol, 4.8 eq.) are dosed into the reactor within seven hours. After that, the reaction mixture is kept at 100 °C for six hours for post reaction. Volatile compounds are removed under vacuum and 981.8 g of a yellowish and highly viscous product is removed from the reactor.

80.0 g (0.19 mol, 1.0 eq) of the previously obtained product are filled into a steel pressure reactor and 4.1 g of potassium hydroxide (50% aqueous solution) are added. Water is removed under reduced pressure at 110 °C. The reactor is purged with nitrogen to remove air and a nitrogen pressure of 2 bar is set. The reactor is heated to 120 °C and 947.2 g of ethylene oxide (21.5 mol, 115.0 eq.) are added within 12 hours. Volatile compounds are removed under vacuum at 95 °C and 1025.7 g of a brown solid were obtained.

200 g of the obtained ethoxylate are heated to 60 °C and filled into a glass reactor under nitrogen atmosphere. 19.5 g dimethyl sulfate (DMS) are dosed into the reactor in such a manner that 1 ml of DMS is added per minute. Upon addition the temperature increases to 70 °C. After completion of the addition, the mixture is allowed to post-react at 70 °C for two hours. 2.7 g of sulfuric acid are added to the reactor and the temperature is increased to 90 °C and the reactor is set under vacuum (15 mbar) for three hours. After completion of the reaction, 3.5 g of sodium hydroxide (50% aqueous solution) and 40 g of demineralized water are added, and the orange liquid product is removed from the reactor.

### Polymer P2 (inventive)

255.4 g spermine (1.26 mol, 1 eq.) and 51.1 g water are charged to a steel pressure reactor. The reactor is purged with nitrogen to remove air and a nitrogen pressure of 2.5 bar is set. The reactor is heated to 100 °C and 267 g of ethylene oxide (6.06 mol, 4.8 eq.) are dosed into the reactor within four hours. After that, the reaction mixture is kept at 100 °C for six hours for post reaction. Volatile compounds are removed under vacuum at 90 °C and 520.5 g of a clear and highly viscous product is removed from the reactor.

85.0 g (0.21 mol, 1.0 eq) of the previously obtained product are filled into a steel pressure reactor and 4.5 g of potassium hydroxide (50% aqueous solution) are added. Water is removed under reduced pressure at 110 °C. The reactor is purged with nitrogen to remove air and a nitrogen pressure of 2.0 bar is set. The reactor is heated to 120 °C and 1043 g of ethylene oxide (23.7 mol, 112,9 eq.) are added within 15 hours and the mixture is allowed to post react at 120 °C for three hours. Volatile compounds are removed under vacuum at 90 °C and 1026.7 g of a brown solid were obtained.

362.7 g of the obtained ethoxylate are heated to 60 °C and filled into a glass reactor under nitrogen atmosphere. 31.8 g dimethyl sulfate (DMS) are dosed into the reactor in such a manner that 1 ml of DMS is added per minute. Upon addition the temperature increases to 70 °C. After completion of the addition, the mixture is allowed to post-react at 70 °C for two hours. Then, 2.3 g of sulfuric acid are added to the reactor and the reactor is set under vacuum (15 mbar) for three hours. After completion of the reaction, 2.77 g of sodium hydroxide (50% aqueous solution) and 277.4 g of demineralized water are added, and the orange liquid product (50% solid content) is removed from the reactor.

### Polymer P3 (inventive)

150 g of the previously obtained N1,N1'-(hexane-1,6-diyl)bis(propane-1,3-diamine (0.65 mol, 1 eq.) and 15.0 g water are charged to a steel pressure reactor. The reactor is purged with nitrogen to remove air and a nitrogen pressure of 2.0 bar is set. The reactor is heated to 100 °C and 138 g of ethylene oxide (3.13 mol, 4.8 eq.) are dosed into the reactor within six hours. After that, the reaction mixture is kept at 100 °C for six hours for post reaction. Volatile compounds are removed under vacuum at 90 °C and 257.1 g of a clear and highly viscous product is removed from the reactor.

90 g (0.20 mol, 1.0 eq) of the previously obtained product are filled into a steel pressure reactor and 4.5 g of potassium hydroxide (50% aqueous solution) are added. Water is removed under reduced pressure at 110 °C. The reactor is purged with nitrogen to remove air and a nitrogen pressure of 2 bar is set. The reactor is heated to 120 °C and 1033 g of ethylene oxide (23.4 mol, 117 eq.) are added within 15 hours. Volatile compounds are removed under vacuum at 90 °C and 1120 g of a brown solid were obtained.

423.4 g of the obtained ethoxylate are heated to 60 °C and filled into a glass reactor under nitrogen atmosphere. 36.2 g dimethyl sulfate (DMS) are dosed into the reactor in such a manner that 1 ml of DMS is added per minute. Upon addition the temperature increases to 70 °C. After completion of the addition, the mixture is allowed to post-react at 70 °C for two hours. 459.5 g of a brown solid were obtained as product.

366.3 g of the solid were heated to 90 °C and 2.75 g of sulfuric acid are added to the reactor and the reactor is set under vacuum (15 mbar) for three hours. After completion of the reaction, 3.4 g of sodium hydroxide (50% aqueous solution) and 367.3 g of demineralized water are added, and the orange liquid product (50% solid content) is removed from the reactor.

### Comparative examples:

### Polymer CP1 (comparative)

97.9 g 1,2-ethylene diamine (EDA, 1.63 mol, 1 eq.) and 9.7 g water are charged to a steel pressure reactor. The reactor is purged with nitrogen to remove air and a nitrogen pressure of 1.0 bar is set. The reactor is heated to 100 °C and 230 g of ethylene oxide (5.22 mol, 3.2 eq.) are dosed into the reactor within six hours. After that, the reaction mixture is kept at 100 °C for six hours for post reaction. Volatile compounds are removed under vacuum and 327 g of a clear and highly viscous product is removed from the reactor.

42.6 g (0.21 mol, 1.0 eq) of the previously obtained product are filled into a steel pressure reactor and 3.0 g of potassium hydroxide (50% aqueous solution) are added. Water is removed under reduced pressure. The reactor is purged with nitrogen to remove air and a nitrogen pressure of 1 bar is set. The reactor is heated to 130 °C and 717 g of ethylene oxide (16.3 mol, 77.5 eq.) are added within 15 hours. Volatile compounds are removed under vacuum and 752.8 g of a brown solid were obtained.

200 g of the obtained ethoxylate are heated to 60 °C and filled into a glass reactor under nitrogen atmosphere. 13.9 g dimethyl sulfate (DMS) are dosed into the reactor in such a manner that 1 ml of DMS is added per minute. Upon addition the temperature increases to 70 °C. After completion of the addition, the mixture is allowed to post-react at 70 °C for two hours. 4.2 g of sulfuric acid are added to the reactor and the temperature is increased to 90 °C and the reactor is set under vacuum (15 mbar) for three hours. After completion of the reaction, 7.8 g of sodium hydroxide (50% aqueous solution) and 40 g of demineralized water are added, and the orange liquid product is removed from the reactor.

### Polymer CP2 (comparative)

150.0 g 1,4-butylene diamine (1.70 mol, 1 eq.) and 15.0 g water are charged to a steel pressure reactor. The reactor is purged with nitrogen to remove air and a nitrogen pressure of 2.0 bar is set. The reactor is heated to 100 °C and 240 g of ethylene oxide (5.45 mol, 3.2 eq.) are dosed into the reactor within four hours. After that, the reaction mixture is kept at 100 °C for six hours for post reaction. Volatile compounds are removed under vacuum at 90 °C and 380.3 g of a clear and highly viscous product is removed from the reactor.

65.0 g (0.28 mol, 1.0 eq) of the previously obtained product are filled into a steel pressure reactor and 4.1 g of potassium hydroxide (50% aqueous solution) are added. Water is removed under reduced pressure at 110 °C. The reactor is purged with nitrogen to remove air and a nitrogen pressure of 1.5 bar is set. The reactor is heated to 140 °C and 960 g of ethylene oxide (21.8 mol, 77.5 eq.) are added within 14 hours and the mixture is allowed to post react at 140 °C for six hours. Volatile compounds are removed under vacuum at 90 °C and 1022 g of a brown solid were obtained.

382.8 g of the obtained ethoxylate are heated to 60 °C and filled into a glass reactor under nitrogen atmosphere. 26.2 g dimethyl sulfate (DMS) are dosed into the reactor in such a manner that 1 ml of DMS is added per minute. Upon addition the temperature increases to 70 °C. After completion of the addition, the mixture is allowed to post-react at 70 °C for two hours. 407.1 g of a brown solid were obtained as product.

336.5 g of the solid were heated to 90 °C and 3.8 g of sulfuric acid are added to the reactor and the reactor is set under vacuum (15 mbar) for three hours. After completion of the reaction, 5.11 g of sodium hydroxide (50% aqueous solution) and 337.8 g of demineralized water are added, and the orange liquid product (50% solid content) is removed from the reactor.

### Polymer CP3 (comparative)

364 g 1,6-hexamethylene diamine (HMDA, 3.13 mol, 1 eq.) and 36.4 g water are charged to a steel pressure reactor. The reactor is purged with nitrogen to remove air and a nitrogen pressure of 2.0 bar is set. The reactor is heated to 100 °C and 442 g of ethylene oxide (10.0 mol, 3.19 eq.) are dosed into the reactor within six hours. After that, the reaction mixture is kept at 100 °C for six hours for post reaction. Volatile compounds are removed under vacuum and 795.2 g of a clear and highly viscous product is removed from the reactor.

80 g (0.43 mol, 1.0 eq) of the previously obtained product are filled into a steel pressure reactor and 3.3 g of potassium hydroxide (50% aqueous solution) are added. Water is removed under reduced pressure. The reactor is purged with nitrogen to remove air and a nitrogen pressure of 1 bar is set. The reactor is heated to 130 °C and 1053 g of ethylene oxide (23.9 mol, 55.7 eq.) are added within 15 hours. Volatile compounds are removed under vacuum and 1149.4 g of a brown solid were obtained.

364 g of the obtained ethoxylate are heated to 60 °C and filled into a glass reactor under nitrogen atmosphere. 24.8 g dimethyl sulfate (DMS) are dosed into the reactor in such a manner that 1 ml of DMS is added per minute. Upon addition the temperature increases to 70 °C. After completion of the addition, the mixture is allowed to post-react at 70 °C for two hours. 3.4 g of sulfuric acid are added to the reactor and the temperature is increased to 90 °C and the reactor is set under vacuum (15 mbar) for three hours. After completion of the reaction, 3.27 g of sodium hydroxide (50% aqueous solution) and 384 g of demineralized water are added, and the liquid product (84 % solid content) is removed from the reactor.

### Polymer CP4 (comparative)

453.9 g N4-Amine (2.5 mol, 1 eq.) and 43.7 g water are charged to a steel pressure reactor. The reactor is purged with nitrogen to remove air and a nitrogen pressure of 2.0 bar is set. The reactor is heated to 100 °C and 528.6 g of ethylene oxide (12.0 mol, 4.8 eq.) are dosed into the reactor within seven hours. After that, the reaction mixture is kept at 100 °C for six hours for post reaction. Volatile compounds are removed under vacuum and 981.8 g of a yellowish and highly viscous product is removed from the reactor.

80.0 g (0.19 mol, 1.0 eq) of the previously obtained product are filled into a steel pressure reactor and 4.1 g of potassium hydroxide (50% aqueous solution) are added. Water is removed under reduced pressure at 110 °C. The reactor is purged with nitrogen to remove air and a nitrogen pressure of 2 bar is set. The reactor is heated to 120 °C and 947.2 g of ethylene oxide (21.5 mol, 115.0 eq.) are added within 12 hours. Volatile compounds are removed under vacuum at 95 °C and 1025.7 g of a brown solid were obtained.

### Polymer CP5 (comparative)

PEI600 + 20 EO/NH, synthesized as described in WO9532272 or US9738754.

### Characterization of polymers

Molecular weights of the tetramines (for preparation of the inventive polymers) and diamines (for preparation of the comparative polymers) were not measured since those materials were used in high purity (>=94%), therefore their molecular weights are available based on their known molecular structure.

Molecular weights of the polyamine starting material (for preparation of the comparative polymer) were determined by gel permeation chromatography (GPC). The measurement was carried out on a column combination of three following columns: HFIP-LG Guard, PL HFIPGEL and PL HFIPGel. Elution was performed at a constant flow rate of 1 mL/min with Hexafluoroisopropanol and 0.05 wt% Potassium trifluroroacetate. The injected sample was prefiltered over a Millipore Millex FG (0.2 µm), 50 µL were injected with a concentration of 1.5 mg/mL (diluted in eluent). The effluent was monitored by the UV detector DRI Agilent 1100 at λ=230 and 280 nm. The calibration was carried out using PMMA standards (PSS, Mainz, Germany) with a molecular weight from 800 to 2 200 000 g/mol. Values outside of the calibration range were extrapolated.

Molecular weights of the inventive and comparative polymers were obtained by theoretical calculations, using the known molecular weights of the tetramines/diamines (or determined weight-average molecular weight of the polyamine starting material, respectively) and assuming complete conversion both during the alkoxylation step (d) and the quaternization/transsulfation step (e). The calculations were performed as follows:
Based on the known structural information of the employed tetramines/diamines (or determined weight-average molecular weight of the polyamine starting material, respectively) and their individual number of NH-functional groups (or number of monomer repeating units within the polyamine, respectively), the total number of NH-functional groups of the amine starting materials has been obtained accordingly, which represent the sum of the NH-functional groups of all primary and secondary amino groups in the backbone of the starting materials. In the second step, the average theoretical molecular weight of one polyethoxylate chain has been calculated, using the employed molar amount of EO per NH-functional group and assuming complete conversion during the alkoxylation step (d). In the third step, the overall molecular weight of the amine ethoxylates has been calculated, by (i) multiplication of the number of NH-functional groups of the backbone of the starting materials and the average molecular weight of one polyethoxylate chain - assuming that on average each polyethoxylate chain has been attached to one available NH-functional group of the backbone - and (ii) adding the molecular weight of the polymer backbone (see above) itself. In the fourth step, the final molecular weight of the inventive amphoterically-modified trialkylene tetramine ethoxylates/of the comparative non-modified trialkylene tetramine ethoxylates & amphoterically-modified monoalkylene diamine ethoxylates (and of the comparative amphoterically-modified polyamine ethoxylate, respectively) has been calculated by adding the molecular weight of one methyl group and one sulfate group per nitrogen atom present in the amine backbone, multiplied by the degree of conversion applied in this modification step, to the previously obtained molecular weight of the amine ethoxylates, assuming complete conversion during the quaternization/transsulfation step (e) of the present invention.

Composition and analytical data of the inventive and comparative polymers are summarized in Table 1.

**Table 1. Composition and physicochemical characterization of inventive amphoterically-modified trialkylene tetramine ethoxylates and comparative polymers.**

| Polymer | Amine starting material | Alkoxylation | Type of Modification (Degree of Modification) | Molecular weight Mw [g/mol] |
|---|---|---|---|---|
| P.1 | N1,N1'-(ethane-1,2-diyl)bis(propane-1,3-diamine) (N4-Amine), | 20 EO/NH | amphoteric (95%) | 5810 |
| P.2 | N1,N1'-(butane-1,4-diyl)bis(propane-1,3-diamine) (Spermine) | 20 EO/NH | amphoteric (95%) | 5840 |
| P.3 | N1,N1'-(hexane-1,6-diyl)bis(propane-1,3-diamine) | 20 EO/NH | amphoteric (95%) | 5870 |
| CP.1 | 1,2-ethylene diamine | 20 EO/NH | amphoteric (95%) | 3760 |
| CP.2 | 1,4-butylene diamine | 20 EO/NH | amphoteric (95%) | 3790 |
| CP.3 | 1,6-hexamethylene diamine | 20 EO/NH | amphoteric (95%) | 3820 |
| CP.4 | N1,N1'-(ethane-1,2-diyl)bis(propane-1,3-diamine) (N4-Amine), | 20 EO/NH | no modification | 5450 |
| CP.5 | PEI (Polyethyleneimine, based on Aziridine) Mw 600 g/mol | 20 EO/NH | no modification | 13410 |

CP.1: Polymer based on the same diamine starting material from step (a) like the inventive polymer P.1, but not modified via step (b) (and optionally step (c)) to obtain an inventive tetramine starting material
CP.2: Polymer based on the same diamine starting material from step (a) like the inventive polymer P.2, but not modified via step (b) (and optionally step (c)) to obtain an inventive tetramine starting material
CP.3: Polymer based on the same diamine starting material from step (a) like the inventive polymer P.3, but not modified via step (b) (and optionally step (c)) to obtain an inventive tetramine starting material
CP.4: Polymer similar to the inventive polymer P.1 (i.e., based on N4-Amine), but not amphoterically-modified
CP.5: PEI ethoxylate, as described in EP112593 (application), WO9532272 or US9738754 (synthesis)

### Application experiments

### Primary cleaning performance

To determine the primary detergency, the cleaning performance on 4 different circular particulate stains on a polyester fabric (P-H018 /Clay, ground soil; P-H115 /Standard clay; P-H144 /Red pottery clay; P-H145 /Tennis court clay; all from CFT, Vlaardingen, The Netherlands) was measured by determining the color difference (delta E) between the stains after wash and the unsoiled white fabric using a reflectometer (Datacolor SF600 plus). Each experiment containing the 4 different circular particulate stains (one of each of the 4 different circular particulate stains on one polyester fabric, 2 of those fabrics per wash) was repeated 2 times, and the obtained data was used to calculate the average delta E value.

By using these delta E values, the so-called "standardized cleaning performance" (delta delta E) has been calculated. The "standardized cleaning performance" (delta delta E) is the difference of the performance of the laundry detergent including the respective amphoterically-modified trialkylene tetramine ethoxylate or comparative polymer, respectively, vs. the laundry detergent w/o any amphoterically-modified trialkylene tetramine ethoxylate or comparative polymer, respectively.

Table 2 shows the composition of the laundry detergents, Table 3 shows the washing test conditions and Table 4 summarizes the obtained standardized cleaning performance. The standardized cleaning performance shown in Table 4 is the sum of the standardized cleaning performance of all 4 stains. The bigger the sum of the delta delta E value, the bigger the positive contribution of the respective amphoterically-modified trialkylene tetramine ethoxylate or comparative polymer, respectively, on the cleaning performance.

**Table 2. Composition of the liquid laundry detergent.**

| Ingredients | LLD.1 * |
|---|---|
| Linear C₁₂C₁₄-alkylbenzenesulfonic acid | 5.50 |
| C₁₂-fatty alcohol x 2 EO sulfate | 5.40 |
| C₁₂C₁₅-fatty alcohol x 7 EO | 5.40 |
| Coconut C12-C18 fatty acid | 2.40 |
| Sodium hydroxide | 2.20 |
| 1,2-Propylene glycol | 6.00 |
| Ethanol | 2.00 |
| Sodium citrate | 3.00 |
| Demin. water | add 100 |
| pH value | 8.5 |

| | |
|---|---|
| *) All data are wt% active ingredient, independent of the respective product form. | |

**Table 3. Washing conditions for evaluation of primary detergency.**

| Washing conditions | |
|---|---|
| Device | Launder-O-Meter from SDL Atlas, Rock Hill, USA |
| Washing liquor | 250 mL |
| Washing time | 30 minutes |
| Washing temperature | 30 °C |
| Detergent concentration | 3.0 g/L |
| Water hardness (Ca:Mg:HCO3) | 2.5 mmol/L (4:1:8) (14 °dH) |
| Fabric to liquor ratio | 1:10 |
| Amphoterically-modified trialkylene tetramine ethoxylate or comparative polymer addition | 1.67% by weight (vs. liquid laundry detergent) of the polymer (or combination of polymers), 100% active ingredient |
| Test fabric * | 4 different circular particulate stains (P-H018, P-H115, P-H144, P-H145) (CFT, Vlaardingen, The Netherlands) on one polyester fabric; 2 stained fabrics per wash |
| Ballast fabric | 2.5 g SBL 2004 (Soil Ballast Fabric 'Formula 2004' that simulates sebum grease stains; WFK Testgewebe GmbH, |
| | Brueggen, Germany); + additional white polyester and cotton ballast, to yield a 1:1 ratio of polyester/cotton fabric per experiment |

| | |
|---|---|
| *) After the washing experiment, the test fabrics were rinsed with 14 °dH water (2 times), followed by drying at ambient room temperature overnight, prior to the measurement with the reflectometer. | |

**Table 4. Results from washing tests.**

| Detergent | Polymer | Concentration of polymeric additive * | Standardized cleaning performance (sum delta delta E) ** |
|---|---|---|---|
| LLD.1 | P.1 | 1.67 wt% | 14.2 |
| LLD.1 | P.2 | 1.67 wt% | 15.0 |
| LLD.1 | P.3 | 1.67 wt% | 15.4 |
| LLD.1 | CP.1 | 1.67 wt% | 5.7 |
| LLD.1 | CP.2 | 1.67 wt% | 10.9 |
| LLD.1 | CP.3 | 1.67 wt% | 10.8 |
| LLD.1 | CP.4 | 1.67 wt% | 9.6 |
| LLD.1 | CP.5 | 1.67 wt% | 4.6 |

| | | | |
|---|---|---|---|
| *) All data are wt% active ingredient, independent of the respective product form. **) The 95% confidence interval of the applied method for the sum of delta delta E is +/- 1.5. | | | |

The results from the washing tests clearly demonstrate the superior performance of the inventive polymers vs the comparative polymers described in the state of the art. More specifically, it can be concluded from the obtained results that the conversion of the diamines to the respective tetramines (according to step (b), optionally step (c) of the inventive process) leads to polymers exhibiting significantly improved performance, after identical modification of the respective amines to the final amphoterically-modified oligoamine ethoxylates (according to step (d) and (e) of the inventive process). It can be clearly seen by comparison of inventive polymer P.1 and comparative polymer CP.1, or inventive polymer P.2 and comparative polymer CP.2, or inventive polymer P.3 and comparative polymer CP.3, that polymers based on an analogue diamine backbone but with two additional aminopropyl groups show significantly improved removal of particulate stains when applied in liquid laundry detergents. It can be also seen that the amphoteric modification is crucial for a good performance profile (P.1 vs. CP.4). Furthermore, the comparison of all inventive polymers P.1 - P.3 and the state-of-the-art technology for particulate stain removal in laundry detergents (ethoxylated PEI = EPEI; Comparative polymer CP.5) clearly demonstrates the superiority of the novel amphoterically-modified trialkylene tetramine ethoxylates.

## Claims

1. Amphoterically-modified trialkylene tetramine ethoxylates (A) of general formula (I) 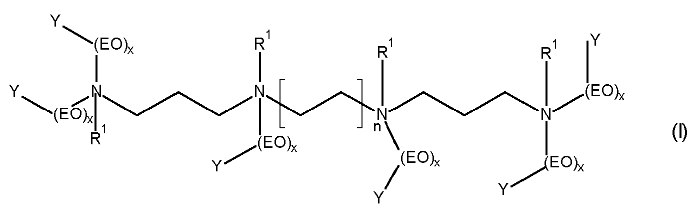 wherein
R¹ are same or different and selected from C₁-C₄-alkyl, H and a free electron pair, wherein at least 50%, preferably at least 80%, more preferably at least 90%, of all R¹ are C₁-C₄-alkyl,
EO means -CH₂-CH₂-O,
Y are same or different and selected from SO₃⁻ and H, wherein at least 30%, preferably at least 50% of all Y are SO₃⁻,
x are same or different and selected from 5 to 50, preferably 10 to 40, and
n is selected from 1, 2 and 3, preferably 1, and wherein n = 1, 2 or 3, at least 80% of R¹ are C₁-C₄-alkyl, the ratio of R¹ = C₁-C₄-alkyl to Y = SO₃⁻ is on average from 1.0:1.0 to 1.0:0.8, and wherein at most 66.7% of all Y are SO₃⁻.

2. Amphoterically-modified trialkylene tetramine ethoxylates (A) according to claim 1 wherein n = 1 and at least 90% of all R¹ are methyl.

3. Amphoterically-modified trialkylene tetramine ethoxylates (A) according to claim 1 or 2 wherein n = 1, at least 90% of all R¹ are methyl and x = 15-30.

4. Mixture of compounds comprising at least one amphoterically-modified trialkylene tetramine ethoxylate (A) according to claim 1, 2, or 3 and at least one isomeric compound according to formula (II) 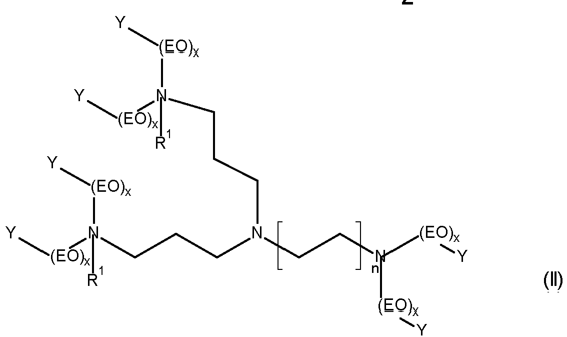 wherein
R¹ are same or different and selected from C₁-C₄-alkyl, H and a free electron pair, wherein at least 50%, preferably at least 80%, more preferably at least 90%, of all R¹ are C₁-C₄-alkyl,
EO means -CH₂-CH₂-O,
Y are same or different and selected from SO₃⁻ and H, wherein at least 30%, preferably at least 50% of all Y are SO₃⁻,
x are same or different and selected from 5 to 50, preferably 10 to 40, and
n is selected from 1, 2 and 3, preferably 1.

5. Mixture according to claim 4 comprising an amphoterically-modified trialkylene tetramine ethoxylate (A) according to formula (I) and compounds according to formula (II) in a total molar ratio in the range of from 10:1 or higher.

6. Mixture comprising a compound according to any of claims 1 to 3 or mixture of compounds according to claim 4 or 5, wherein said mixture additionally comprises the sulfate of an alkali metal and /or an amine.

7. Mixture according to claim 6, wherein said mixture additionally comprises the sulfate salt of an alkanolamine.

8. Process for making amphoterically-modified trialkylene tetramine ethoxylates (A) according to claim 1, 2, or 3, said process comprising the steps of
(a) providing a diamine selected from 1,2-ethylene diamine, 1,4-butylene diamine, 1,6-hexamethylene diamine and mixtures thereof
(b) cyanoethylation of said diamine with acrylonitrile in a ratio from 1:1 to 1:2.5, followed by hydrogenation, to obtain trialkylene tetramines with 1, 2 and 3 repeating units,
(c) optionally purification of the trialkylene tetramines from step (b)
(d) ethoxylation of said trialkylene tetramines from step b or c, and
(e) at least partial quaternization and transsulfation with a di-C₁-C₄-alkyl sulfate.

9. Process according to claim 8, wherein the purification step (g) is performed to obtain trialkylene tetramines with 1, 2 and 3 repeating units, or mixtures thereof, with a purity of at least 50 wt%, preferably of at least 75 wt%, most preferably of at least 90 wt%.

10. Process according to any one of claims 8 to 9, wherein the at least partial quaternization in step (i) is performed with dimethyl sulfate.

11. Process according to any one of claims 8 to 10, wherein the transsulfation in step (i) is performed with sulfuric acid as a catalyst.

12. Process according to any of claims 8 to 11, wherein the transsulfation in step (i) is performed quantitatively with a yield of >=80% and a slightly cationic or net neutral polymer is obtained.

13. Process according to any of claims 8 to 12, wherein said process includes the subsequent step of neutralization of the sulfuric acid with a base selected from the group of alkali metal hydroxides and amines.

14. Process according to claim 13, wherein the base for neutralization of the sulfuric acid is selected from the group of alkanolamines.

15. Process according to any of claims 8 to 14, wherein the ethoxylation in step (h) is performed in two sub-steps:
(i) conversion with up to one mole of ethylene oxide per N-H function followed by
(ii) conversion with more ethylene oxide under alkaline catalysis.

16. Use of amphoterically-modified trialkylene tetramine ethoxylates (A) according to claim 1, 2, or 3 or mixtures according to any of claims 4 to 7 in laundry applications.

17. Laundry formulation, comprising at least one of the amphoterically-modified trialkylene tetramine ethoxylates (A) according to any of claims 1 to 3 and/or a mixture according to any of claims 4 to 7.

## Patentansprüche

1. Amphoterisch modifizierte Trialkylentetramin-Ethoxylate (A) der allgemeinen Formel (I) 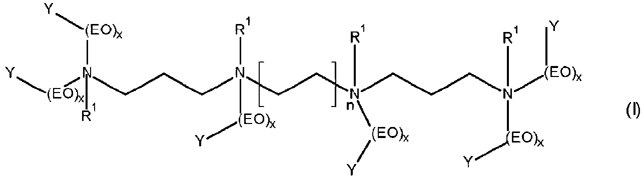 wobei
R¹ gleich oder verschieden sind und ausgewählt sind aus C₁-C₄-Alkyl, H und einem freien Elektronenpaar, wobei mindestens 50%, vorzugsweise mindestens 80%, besonders bevorzugt mindestens 90%, aller R¹ C₁-C₄-Alkyl sind,
EO bedeutet -CH₂-CH₂-O,
Y gleich oder verschieden sind und ausgewählt sind aus SO₃- und H, wobei mindestens 30%, vorzugsweise mindestens 50% aller Y SO₃- sind,
x gleich oder verschieden sind und ausgewählt sind aus 5 bis 50, vorzugsweise 10 bis 40, und
n ausgewählt ist aus 1, 2 und 3, vorzugsweise 1, und wobei für n = 1, 2 oder 3 mindestens 80% der R¹ C₁-C₄-Alkyl sind, das Verhältnis von R¹ = C₁-C₄-Alkyl zu Y = SO₃- im Durchschnitt von 1,0:1,0 bis 1,0:0,8 beträgt und wobei höchstens 66,7% aller Y SO₃- sind.

2. Amphoterisch modifizierte Trialkylentetramin-Ethoxylate (A) nach Anspruch 1, wobei n = 1 und mindestens 90% aller R¹ Methyl sind.

3. Amphoterisch modifizierte Trialkylentetramin-Ethoxylate (A) nach Anspruch 1 oder 2, wobei n = 1, mindestens 90% aller R¹ Methyl sind und x = 15-30.

4. Gemisch von Verbindungen, umfassend mindestens ein amphoterisch modifiziertes Trialkylentetramin-Ethoxylat (A) nach Anspruch 1, 2 oder 3 und mindestens eine isomere Verbindung gemäß Formel (II) 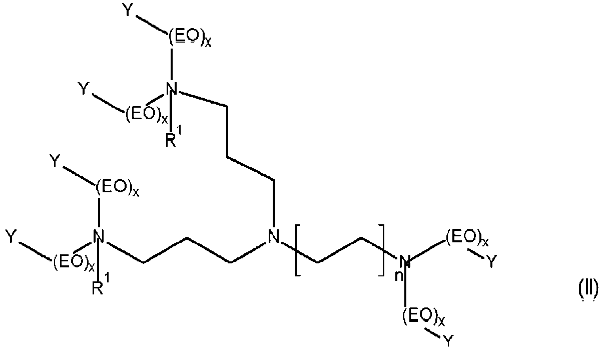 wobei
R¹ gleich oder verschieden sind und ausgewählt sind aus C₁-C₄-Alkyl, H und einem freien Elektronenpaar, wobei mindestens 50%, vorzugsweise mindestens 80%, besonders bevorzugt mindestens 90%, aller R¹ C₁-C₄-Alkyl sind,
EO bedeutet -CH₂-CH₂-O,
Y gleich oder verschieden sind und ausgewählt sind aus SO₃- und H, wobei mindestens 30%, vorzugsweise
mindestens 50% aller Y SO₃- sind,
x gleich oder verschieden sind und ausgewählt sind aus 5 bis 50, vorzugsweise 10 bis 40, und
n ausgewählt ist aus 1, 2 und 3, vorzugsweise 1.

5. Gemisch nach Anspruch 4, umfassend ein amphoterisch modifiziertes Trialkylentetramin-Ethoxylat (A) gemäß Formel (I) und Verbindungen gemäß Formel (II) in einem gesamten molaren Verhältnis im Bereich von 10:1 oder höher.

6. Gemisch, umfassend eine Verbindung nach einem der Ansprüche 1 bis 3 oder ein Gemisch von Verbindungen nach Anspruch 4 oder 5, wobei das Gemisch zusätzlich das Sulfat eines Alkalimetalls und/oder eines Amins umfasst.

7. Gemisch nach Anspruch 6, wobei das Gemisch zusätzlich das Sulfatsalz eines Alkanolamins umfasst.

8. Verfahren zur Herstellung von amphoterisch modifizierten Trialkylentetramin-Ethoxylaten (A) nach Anspruch 1, 2 oder 3, wobei das Verfahren die folgenden Schritte umfasst:
(a) Bereitstellen eines Diamins, ausgewählt aus 1,2-Ethylendiamin, 1,4-Butylendiamin, 1,6-Hexamethylendiamin und Mischungen davon,
(b) Cyanoethylierung des Diamins mit Acrylnitril in einem Verhältnis von 1:1 bis 1:2,5, gefolgt von Hydrierung, um Trialkylentetramine mit 1, 2 und 3 Wiederholungseinheiten zu erhalten,
(c) optionale Reinigung der Trialkylentetramine aus Schritt (b),
(d) Ethoxylierung der Trialkylentetramine aus Schritt b oder c, und
(e) zumindest teilweise Quaternisierung und Transsulfatierung mit einem Di-C₁-C₄-Alkylsulfat.

9. Verfahren nach Anspruch 8, wobei der Reinigungsschritt (g) durchgeführt wird, um Trialkylentetramine mit 1, 2 und 3 Wiederholungseinheiten oder Mischungen davon mit einer Reinheit von mindestens 50 Gew.-%, vorzugsweise mindestens 75 Gew.-%, am meisten bevorzugt mindestens 90 Gew.-% zu erhalten.

10. Verfahren nach einem der Ansprüche 8 bis 9, wobei die zumindest teilweise Quaternisierung in Schritt (i) mit Dimethylsulfat durchgeführt wird.

11. Verfahren nach einem der Ansprüche 8 bis 10, wobei die Transsulfatierung in Schritt (i) mit Schwefelsäure als Katalysator durchgeführt wird.

12. Verfahren nach einem der Ansprüche 8 bis 11, wobei die Transsulfatierung in Schritt (i) quantitativ mit einer Ausbeute von >=80% durchgeführt wird und ein schwach kationisches oder netto neutrales Polymer erhalten wird.

13. Verfahren nach einem der Ansprüche 8 bis 12, wobei das Verfahren den nachfolgenden Schritt der Neutralisation der Schwefelsäure mit einer Base umfasst, die ausgewählt ist aus der Gruppe der Alkalimetallhydroxide und Amine.

14. Verfahren nach Anspruch 13, wobei die Base zur Neutralisation der Schwefelsäure aus der Gruppe der Alkanolamine ausgewählt ist.

15. Verfahren nach einem der Ansprüche 8 bis 14, wobei die Ethoxylierung in Schritt (h) in zwei Teilschritten durchgeführt wird:
(i) Umsetzung mit bis zu einem Mol Ethylenoxid pro N-H-Funktion, gefolgt von
(ii) Umsetzung mit weiterem Ethylenoxid unter alkalischer Katalyse.

16. Verwendung von amphoterisch modifizierten Trialkylentetramin-Ethoxylaten (A) nach Anspruch 1, 2 oder 3 oder Gemischen nach einem der Ansprüche 4 bis 7 in Waschanwendungen.

17. Waschmittelformulierung, umfassend mindestens eines der amphoterisch modifizierten Trialkylentetramin-Ethoxylate (A) nach einem der Ansprüche 1 bis 3 und/oder ein Gemisch nach einem der Ansprüche 4 bis 7.

## Revendications

1. Éthoxylates de trialkylène tétramine à modification amphotère (A) de formule générale (I) 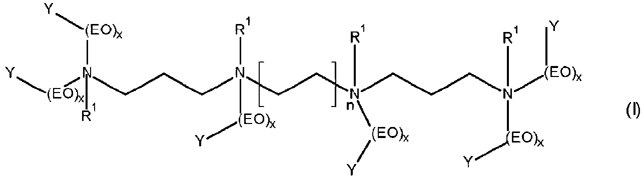 dans laquelle
R¹ sont identiques ou différents et choisis parmi les alkyles en C₁-C₄, H et une paire d'électrons libres, dans laquelle au moins 50 %, de préférence au moins 80 %, plus préférablement au moins 90 %, de tous les R¹ sont des alkyles en C₁-C₄,
EO désigne -CH₂-CH₂-O,
Y sont identiques ou différents et choisis parmi SO₃- et H, dans laquelle au moins 30 %, de préférence au moins 50 % de tous les Y sont SO₃⁻,
x sont identiques ou différents et choisis de 5 à 50, de préférence de 10 à 40, et
n est choisi parmi 1, 2 et 3, de préférence 1, et dans laquelle n = 1, 2 ou 3, au moins 80 % des R¹ sont des alkyles en C₁-C₄, le rapport de R¹ = alkyle en C₁-C₄ à Y = SO₃- est en moyenne de 1,0:1,0 à 1,0:0,8, et dans laquelle au plus 66,7 % de tous les Y sont SO₃-.

2. Éthoxylates de trialkylène tétramine à modification amphotère (A) selon la revendication 1, dans lesquels n = 1 et au moins 90 % de tous les R¹ sont méthyle.

3. Éthoxylates de trialkylène tétramine à modification amphotère (A) selon la revendication 1 ou 2, dans lesquels n = 1, au moins 90 % de tous les R¹ sont méthyle et x = 15-30.

4. Mélange de composés comprenant au moins un éthoxylate de trialkylène tétramine à modification amphotère (A) selon la revendication 1, 2 ou 3 et au moins un composé isomérique selon la formule (II) 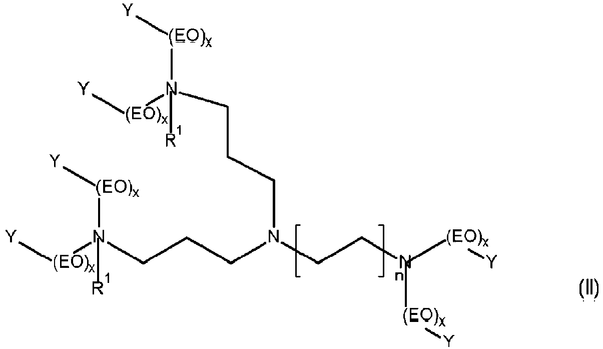 dans laquelle
R¹ sont identiques ou différents et choisis parmi les alkyles en C₁-C₄, H et une paire d'électrons libres, dans laquelle au moins 50 %, de préférence au moins 80 %, plus préférablement au moins 90 %, de tous les R¹ sont des alkyles en C₁-C₄,
EO désigne -CH₂-CH₂-O,
Y sont identiques ou différents et choisis parmi SO₃- et H, dans laquelle au moins 30 %, de préférence
au moins 50 % de tous les Y sont SO₃⁻,
x sont identiques ou différents et choisis de 5 à 50, de préférence de 10 à 40, et
n est choisi parmi 1, 2 et 3, de préférence 1.

5. Mélange selon la revendication 4 comprenant un éthoxylate de trialkylène tétramine à modification amphotère (A) selon la formule (I) et des composés selon la formule (II) dans un rapport molaire total dans la plage de 10:1 ou supérieur.

6. Mélange comprenant un composé selon l'une quelconque des revendications 1 à 3 ou un mélange de composés selon la revendication 4 ou 5, ledit mélange comprenant en outre le sulfate d'un métal alcalin et/ou d'une amine.

7. Mélange selon la revendication 6, dans lequel ledit mélange comprend en outre le sel sulfate d'une alcanolamine.

8. Procédé de fabrication d'éthoxylates de trialkylène tétramine à modification amphotère (A) selon la revendication 1, 2 ou 3, ledit procédé comprenant les étapes suivantes :
(a) fourniture d'une diamine choisie parmi la 1,2-éthylène diamine, la 1,4-butylène diamine, la 1,6-hexaméthylène diamine et leurs mélanges,
(b) cyanoéthylation de ladite diamine avec de l'acrylonitrile dans un rapport de 1:1 à 1:2,5, suivie d'une hydrogénation, pour obtenir des trialkylène tétramines avec 1, 2 et 3 unités répétitives,
(c) purification optionnelle des trialkylène tétramines de l'étape (b),
(d) éthoxylation desdites trialkylène tétramines de l'étape b ou c, et
(e) quaternisation au moins partielle et transsulfatation avec un di-alkylsulfate en C₁-C₄.

9. Procédé selon la revendication 8, dans lequel l'étape de purification (g) est réalisée pour obtenir des trialkylène tétramines avec 1, 2 et 3 unités répétitives, ou leurs mélanges, avec une pureté d'au moins 50 % en poids, de préférence d'au moins 75 % en poids, le plus préférablement d'au moins 90 % en poids.

10. Procédé selon l'une quelconque des revendications 8 à 9, dans lequel la quaternisation au moins partielle à l'étape (i) est réalisée avec du sulfate de diméthyle.

11. Procédé selon l'une quelconque des revendications 8 à 10, dans lequel la transsulfatation à l'étape (i) est réalisée avec de l'acide sulfurique comme catalyseur.

12. Procédé selon l'une quelconque des revendications 8 à 11, dans lequel la transsulfatation à l'étape (i) est réalisée quantitativement avec un rendement de >=80 % et un polymère légèrement cationique ou globalement neutre est obtenu.

13. Procédé selon l'une quelconque des revendications 8 à 12, dans lequel ledit procédé comprend l'étape ultérieure de neutralisation de l'acide sulfurique avec une base choisie dans le groupe des hydroxydes de métaux alcalins et des amines.

14. Procédé selon la revendication 13, dans lequel la base pour la neutralisation de l'acide sulfurique est choisie dans le groupe des alcanolamines.

15. Procédé selon l'une quelconque des revendications 8 à 14, dans lequel l'éthoxylation à l'étape (h) est réalisée en deux sous-étapes :
(i) conversion avec jusqu'à une mole d'oxyde d'éthylène par fonction N-H, suivie de
(ii) conversion avec davantage d'oxyde d'éthylène sous catalyse alcaline.

16. Utilisation d'éthoxylates de trialkylène tétramine à modification amphotère (A) selon la revendication 1, 2 ou 3 ou de mélanges selon l'une quelconque des revendications 4 à 7 dans des applications de lessive.

17. Formulation de lessive comprenant au moins un des éthoxylates de trialkylène tétramine à modification amphotère (A) selon l'une quelconque des revendications 1 à 3 et/ou un mélange selon l'une quelconque des revendications 4 à 7.
